# EUROPÄISCHE PATENTSCHRIFT

(11) **EP 1 525 634 B1**
(45) Veröffentlichungstag und Bekanntmachung des Hinweises auf die Patenterteilung: **05.05.2010**
(21) Anmeldenummer: 03787615.8
(22) Anmeldetag: 28.06.2003
(51) Int. Cl.: H01M 8/02

(54) **BIPOLARE PLATTE FÜR EINE BRENNSTOFFZELLE**
BIPOLAR PLATE FOR A FUEL CELL
PLAQUE BIPOLAIRE POUR PILE A COMBUSTIBLE

(30) Priorität: 25.07.2002 DE 10233982
(43) Veröffentlichungstag der Anmeldung: 27.04.2005
(73) Patentinhaber: Forschungszentrum Jülich GmbH, 52425 Jülich (DE)
(72) Erfinder: DOHLE, Hendrik, 52224 Stolberg (DE); BEWER, Thomas, 8800 Thalwil (CH); MERGEL, Jürgen, 52428 Jülich (DE); STOLTEN, Detlef, 52076 Aachen (DE); WÜSTER, Thorsten, 52076 Aachen (DE)
(86) Internationale Anmeldenummer: PCT/DE2003/002155
(87) Internationale Veröffentlichungsnummer: WO 2004/017448

(56) Entgegenhaltungen:
- EP-A- 0 410 159
- EP-A- 0 817 297
- US-A- 5 935 725
- PATENT ABSTRACTS OF JAPAN vol. 1997, no. 07, 31. Juli 1997 (1997-07-31) & JP 09 063601 A (ISHIKAWAJIMA HARIMA HEAVY IND CO LTD), 7. März 1997 (1997-03-07)
- PATENT ABSTRACTS OF JAPAN vol. 007, no. 276 (E-215), 9. Dezember 1983 (1983-12-09) & JP 58 155666 A (HITACHI SEISAKUSHO KK), 16. September 1983 (1983-09-16)

## Beschreibung

### Technisches Gebiet

Die Erfindung betrifft eine bipolare Platte für eine Brennstoffzelle, insbesondere eine sehr kompakt aufgebaute bipolare Platte für eine Niedertemperatur-Brennstoffzelle.

### Stand der Technik

Brennstoffzellen wandeln chemische Energie in elektrische Energie um, ohne dabei nennenswerte Emissionen zu erzeugen. Verschiedene Brennstoffzellentypen sind bekannt, so beispielsweise die Hochtemperatur-Brennstoffzelle (Solid-Oxide-Fuel-Cell = SOFC) oder auch die sogenannte Niedertemperatur-Brennstoffzelle (Polymer-Elektrolyt-Membran = PEM).

Eine einzelne Brennstoffzelle weist in der Regel eine Kathode, eine Anode sowie einen dazwischen befindlichen Elektrolyten, beispielsweise in Form einer ionenleitfähigen Membran, auf. Der Kathode wird ein Oxidationsmittel, z. B. Sauerstoff oder Luft, und der Anode wird ein Brennstoff, z. B. Wasserstoff zugeführt. Während ein direkter Kontakt wischen dem Oxidatiorismittel und dem Brennstoff innerhalb der Brennstoffzelle verhindert wird, wird ein Ionentransport durch die Membran zugelassen. Der Wasserstoff wird an der Anode unter Produktion von Protonen oxidiert. Die Protonen wandern durch die Membran zur Kathode, wo sie mit dem Oxidationsmittel zu Wasser reagieren. Die gesamte elektrochemische Reaktion ist spontan, so dass Energie im Form von Spannung erzeugt wird. Mehrere Brennstoffzellen werden in der Regel zur Erzielung großer elektrischer Leistungen durch verbindende Elemente, sogenannte bipolare Platten, elektrisch und mechanisch miteinander verbünden. Mittels bipolarer Platten entstehen so übereinander gestapelte, elektrisch in Serie geschaltete Brennstoffzellen, die auch Brennstoffzellenstapel genannt werden.

Die beiden Hauptelemente in einer Brennstoffzelle sind zum einen die Membran-Elektrolyt-Einheit (MEA) und zum anderen die Betriebsmittelverteilereinheiten (bipolare Platten). Diese Betriebsmittelverteilereinheiten, die auch gleichzeitig die Kontaktierung zwischen den Brennstoffzellen sicherstellen, bestehen in der Regel aus Graphit oder Metall. Sie weisen regelmäßig eine Vielzahl von Kanälen auf, die die Betriebsstoffe im Idealfall gleichmäßig über die MEA verteilen sollen und eine Abführung des gebildeten Produktionswassers ermöglichen.

Das bislang am häufigsten eingesetzte Material für eine bipolare Platte ist Graphit. Es ist vorteilhaft leitfähig, korrosionsbeständig und sehr haltbar. Nachteilig ist Graphit jedoch teuer und führt zu großen Bauvolumina der einzelnen Zellen.

Titan ist ebenfalls als bipolares Plattenmaterial geeignet. Es ist extrem zäh und kann bei entsprechender Behandlung auch die erforderliche Leitfähigkeit und Korrosionsbeständigkeit aufweisen. Es ist nachteilig jedoch sehr teuer und auch nur schwer durch Maschinen bearbeitbar.

Auch Metalle auf Eisenbasis, wie beispielsweise nichtrostende Stähle, werden derzeit als Material für eine bipolare Platte eingesetzt. Metalle weisen den Vorteil der sehr guten elektrischen Leitfähigkeit auf und sind einfach zu bearbeiten. Der Nachteil liegt in der Schwere der einzelnen Bauteile und in der nicht so guten Haltbarkeit aufgrund der Korrosionsanfälligkeit.

Bislang sind für die Zellrahmen der MEA und auch die bipolaren Platten regelmäßig aufwendige Strukturen notwendig, die eine gewisse Mindestbaugröße voraussetzen und kompliziert in der Herstellung sind. Die bipolaren Platten werden dabei zwischen zwei MEAs eingesetzt, und bilden so die Verbindung zwischen zwei Brennstoffzellen.

In der US 5,482,792 wird eine Betriebsmittelverteilereinheit aus einen porösen, elektronenleitenden Sammler beschrieben, der die Betriebsmittel über die MEA verteilt, das Produktionswasser abführt und den elektrischen Strom der Elektroden abführt. In einem Ausführungsbeispiel wird ein metallisches Drahtgewebe, bzw. Netz als Sammler/Verteiler in eine Gummidichtung eingesetzt, das mehrere Kanäle für die Zu- und Abfuhr aufweist. Die Gummidichtung weist dabei eine Dicke von ca. 2 mm auf. Eine bipolare Platte für den Einsatz zwischen zwei Brennstoffzellen würde somit eine Dicke von mindestens 2 - 5 mm aufweisen.

Aus WO 98/13 891 ist eine bipolare Platte für eine Brennstoffzelle bekannt, die im wesentlichen aus zahlreichen planaren Bauteilen besteht. An eine dünne metallische Folie grenzen dabei auf beiden Seiten jeweils zwei netzartige Strukturen. Diese Einheit bildet die sogenannte bipolare Platte. Nachteilig erfordert diese bipolare Platte aufwendige Dichtungsmaßnahmen zwischen den einzelnen Bauteilen. Sie bildet ein Schichtsystem mit einer Dicke von ca. 3 mm.

Aus US5298342 ist eine bipolare Platte für eine Brennstoffzelle mit einer Nassdichtung ("wet seal") bekannt.

### Aufgabe und Lösung

Aufgabe der Erfindung ist es, eine bipolare Platte für den Einsatz in einem Brennstoffzellenstapel zu schaffen, die eine sehr kompakte Bauweise von insgesamt weniger als 1,4 mm Schichtdicke ermöglicht, und die die vorgenannten Nachteile, insbesondere die Korrosionsanfälligkeit, nicht aufweist. Ferner ist es die Aufgabe der Erfindung, einen kompakten und effektiven Brennstoffzellenstapel zur Verfügung zu stellen.

Die Aufgabe der Erfindung wird gelöst durch eine bipolare Platte für einen Brennstoffzellenstapel gemäß Hauptanspruch sowie durch einen Brennstoffzellenstapel gemäß Nebenanspruch. Vorteilhafte Ausführungsformen für die bipolare Platte oder den Brennstoffzellenstapel ergeben sich aus den jeweils darauf rückbezogenen Ansprüchen.

### Darstellung der Erfindung

Die bipolare Platte nach Anspruch 1 ist modular aufgebaut und umfaßt eine dünne Mittelplatte, wenigstens eine Zwischenplatte sowie wenigstens eine Abdeckplatte. Die Platten sind schichtförmig angeordnet, wobei sich die Zwischenplatte zwischen der Mittelplatte und der Abdeckplatte befindet. Sowohl die Mittelplatte als auch die Abdeckplatte können aus Metall, Kunststoff oder Graphit sein. Innerhalb eines Brennstoffzellenstapels weist die bipolare Platte vorteilhaft zwei Zwischenplatten und zwei Abdeckplatten auf, die auf beiden Seiten der Mittelplatte angeordnet sind.

Die Mittelplatte ist gasdicht ausgestaltet, da sie in einem Brennstoffzellenstapel in der Regel einen Anoden- von einem Kathodenraum trennt. Die Mittelplatte kann gleichzeitig auch als Randplatte einen Elektrodenraum einer Zelle in einem Brennstoffzellenstapel nach außen hin gasdicht abschließen.

Die Mittelplatte kann insbesondere aus Metall oder auch Graphit ausgestaltet sein. Als Material für die Mittelplatte ist darüber hinaus jedes Material geeignet, welches während des vorgesehenen Betriebs der Brennstoffzelle gasdicht ist und eine genügend hohe chemische Beständigkeit gegen die Betriebsmittel aufweist. Das heißt, auch Kunststoff ist prinzipiell als Material für die Mittelplatte geeignet. In diesem Fall kann die erforderliche Leitfähigkeit durch leitfähige Kontakte, z. B. in Form von eingebrachten Metallen, vorgesehen werden.

Erfindungsgemäß weist die Mittelplatte eine, meist jedoch mehrere Erhebungen auf, die in der Regel in einem zentralen Bereich angeordnet sind, und beispielsweise durch Prägen oder Stanzen herstellbar sind. Diese Erhebungen dienen der elektrischen Kontaktierung und/oder der mechanischen Beabstandung der Abdeckplatte.

Zwischen der Mittelplatte (Randplatte) und einer Abdeckplatte ist eine Zwischenplatte angeordnet, die als Strömungsverteiler dient. Dazu weist die Zwischenplatte regelmäßig eine zentrale Aussparung auf. Sie besitzt somit ein rahmenartiges Aussehen. Die Zwischenplatte kann besonders vorteilhaft als eine Flachdichtung ausgestaltet sein. Vorteilhaft sind regelmäßig auch zusätzlich Aussparungen in dem Randbereich für die Zu- und Ableitung eines Betriebsmittels vorgesehen.

Die Erhebungen der Mittelplatte sind in dem Bereich angeordnet, in dem die Zwischenplatte ihre zentrale Aussparung aufweist, so dass ein gasdichter Kontakt zwischen der Zwischenplatte und der Mittelplatte trotz der Erhebungen möglich ist.

Die zentrale Aussparung der Zwischenplatte entspricht hauptsächlich der Fläche einer angrenzenden Membran-Elektrolyt-Einheit (MEA) und ist in der Regel rechteckig oder quadratisch ausgestaltet, wobei eine Verbindung zu einem der Zuführungs- und einem der Abführungskanäle besteht. Der überwiegend quadratische, bzw. rechteckige Teil der Aussparung kann vorteilhaft mit einem Gewebe oder Netz ausgefüllt sein. Ein Gewebe oder ein Netz sind besonders gut für eine Gleichverteilung des Betriebsmittels über die gesamte Fläche geeignet. Der zwischen Netz und Zu- bzw. Abführungskanal verbleibende, meist dreieckig zulaufende Teil der Aussparung bildet regelmäßig den sogenannten Manifold.

Um ein Eindrücken einer MEA in die Aussparung bzw. in das Gewebe zu verhindern, wird die Zwischenplatte durch eine Abdeckplatte begrenzt.

Auch die Abdeckplatte weist regelmäßig Aussparungen im Randbereich für die Zu- bzw. Abführung eines Betriebsmittels auf. Im Bereich der zentralen Aussparung der Zwischenschicht weist die Abdeckplatte ebenfalls einzelne Aussparungen auf. Diese sind so klein, bzw. schmal, dass ein Eindrücken der MEA unterbleibt. Andererseits sind diese Kanäle dazu geeignet, eine weitere Gleichverteilung des Betriebsmittels aus der Aussparung der Zwischenplatte über die Abdeckplatte an die Oberfläche der angrenzenden MEA zu bewirken. Dabei hat sich ein parallel zu dem Manifold der Zwischenplatte ausgestalteter Kanal in der Abdeckplatte als besonders vorteilhaft erwiesen.

Die einzelnen Platten können vorteilhaft verklebt werden, was zu einer breiten Auswahl an einzusetzenden Materialien führt.

### Spezieller Beschreibungsteil

Nachfolgend wird die Erfindung anhand von Figuren und Ausführungsbeispielen näher erläutert, ohne dass dadurch der Gegenstand der Erfindung eingeschränkt wird. Es zeigen
- Figur 1:: Schematischer Aufbau einer aus dem Stand der Technik bekannten bipolaren Platte mit einer ebenen Mittel- bzw. Randplatte, zwei Abdeckplatten, zwei dazwischen angeordneten Zwischenplatten mit netzartigen Strömungs- verteilern sowie einer Membran-Elektroden-Einheit (MEA).
- Figur 2:: Schematischer Aufbau einer Ausführungsform der erfin- dungsgemäßen bipolaren Platte mit einer Mittelplatte, zwei Abdeckplatten und zwei dazwischen angeordneten Zwischenplatten mit Strömungsverteilern, wobei die Mit- telplatte Erhebungen auf mindestens einer Seite auf- weist.
- Figur 3:: Verschiedene Ausführungsbeispiele einer Abdeckplatte für eine erfindungsgemäße bipolare Platte.

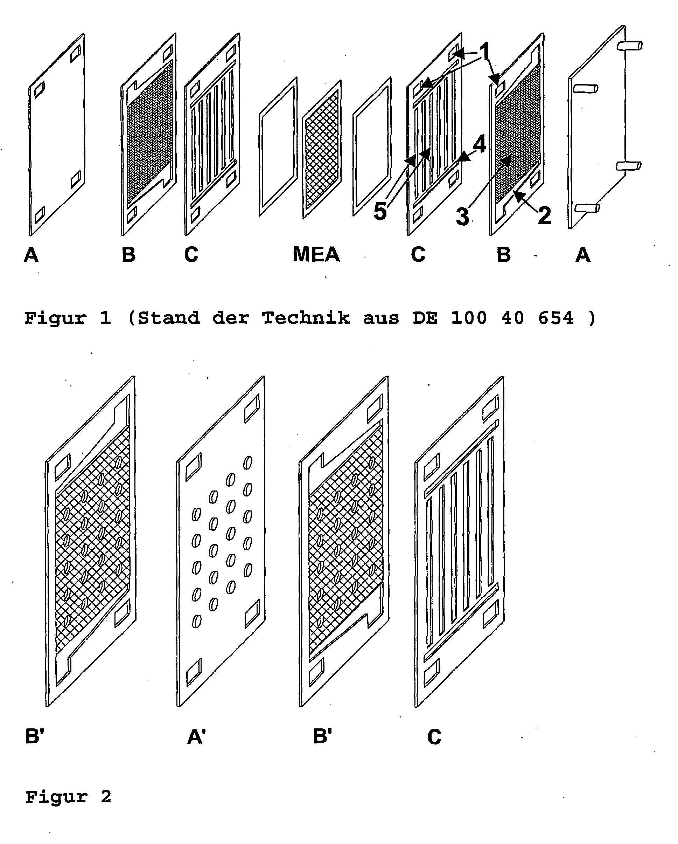

In der Figur 1 ist eine bipolare Platte für eine Brennstoffzelle gemäß dem Stand der Technik zu sehen. An eine ebene Mittel- bzw. Randplatte (A), die Durchbrüche (1) für die Zuleitungen der Betriebsmittel aufweist, grenzt eine Zwischenplatte (B). Auch sie weist Durchbrüche (1) für die Zuleitungen der Betriebsmittel auf sowie eine zentrale Aussparung (2). Der quadratische, bzw. rechteckige Mittelteil der zentralen Aussparung wird vorteilhaft durch ein netzartiges Gewebe (3) ausgefüllt. An die Zwischenplatte grenzt die Abdeckplatte (C), die einerseits auch Durchbrüche (1) für die Zuleitungen der Betriebsmittel, andererseits aber auch waagerechte (4) und senkrechte Kanäle (5) aufweist. Diese dienen der weiteren Gleichverteilung der Betriebsmittel über die angrenzende Membran-Elektroden-Einheit (MEA).

In Figur 2 ist eine Ausführungsform der erfindungsgemäßen bipolaren Platte zu sehen. An eine metallische Mittelplatte (A'), die zu beiden Seiten hin Erhebungen (z. B. geprägte Ausformungen) aufweist, grenzt jeweils ein Strömungsverteiler (Zwischenplatte B'). Diese weisen jeweils mehrere Aussparungen auf, wobei in der zentralen Aussparung zumindest teilweise ein Netz eingelegt ist. Der nicht durch das Netz ausgefüllte Bereich der zentralen Aussparung bildet den sogenannten Manifold. Die Zwischenplatten (B') werden jeweils durch eine Abdeckplatte (C) abgeschlossen, die ihrerseits mehrere Aussparungen aufweisen. Auf der rechten Seite zeigt die Abdeckplatte senkrechte und waagerechte Kanäle, wobei die waagerechten Kanäle parallel zu den Manifolds verlaufen und diese damit vorteilhaft noch vergrößern. Die Abdeckplatten verhindern regelmäßig ein Eindrücken der sich daran anschließenden Membran-Elektroden-Einheit (MEA) in die netzartigen Verteilerstrukturen.

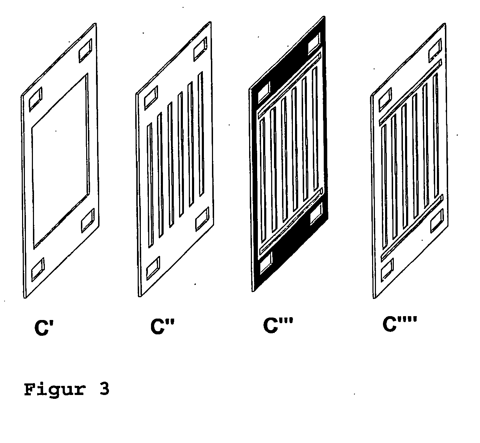

Einige verschiedene Ausführungsformen der Abdeckplatte zeigt Figur 3. C' beschreibt eine Abdeckplatte mit einer Aussparung, die exakt für eine MEA vorgesehen ist. Die Ausgestaltung der Abdeckplatte, bzw. die Größe der MEA ist derart bemessen, dass sie nicht in einen benachbarten Manifold gedrückt werden kann, da dieser durch einen massiven Teil der Abdeckplatte abgeschlossen wird.

C" ist eine Abdeckplatte mit Kanälen zur weiteren Verbesserung der Strömung eines Betriebsmittels über die z. B. netzartigen Strömungsverteiler.

Vorteilhaft wird die Abdeckplatte C"' schon mit einer aufgebrachten Dichtung produziert, so dass beim Zusammenbau einer Brennstoffzelle eine nachträgliche Abdichtung zwischen der bipolaren Platte und der MEA vorteilhaft entfallen kann. Die zusätzlichen waagerechten Kanäle in C"" verlaufen parallel zu den Manifolds in dem benachbarten Strömungsverteiler und vergrößern sie daher.

Damit ergeben sich insgesamt folgende Vorteile für die Erfindung:
- es ist eine sehr flache Bauweise < 1,5 mm pro bipolare Platte realisierbar;
- eine elektrische Kontaktierung von Anode und Kathode wird gewährleistet;
- es wird ein ausreichender Anpressdruck auf die Elektrode sichergestellt und eine Delaminierung regelmäßig vermieden;
- eine gleichmäßige Verteilung der Betriebsmittel wird sichergestellt;
- die bipolare Platte weist eine besondere Langzeitstabilität und chemische Beständigkeit auf.

### Legende zu den Figuren

### Figur 1: (Stand der Technik)

- A: = Mittel- bzw. Endplatte
- B: = Zwischenplatte mit Netzeinlage und Manifold
- C: = Abdeckplatte mit Kanälen
- MEA: = Membran-Elektroden-Einheit
- 1: = Zu- und Abführungskanäle für die Betriebsmittel senkrecht zur Ebene der Brennstoffzelle, bzw. zur bipolaren Platte
- 2: = zentrale Aussparung der Zwischenplatte
- 3: = Netz als Strömungsverteiler
- 4: = waagerechte Kanäle in der Abdeckplatte, die parallel zu benachbarten Manifolds verlaufen.
- 5: = senkrechte Kanäle in der Abdeckplatte zur verbesserten Verteilung der Betriebsmittel

### Figur 2: eine Ausführungsform der Erfindung

- A' =: erfindungsgemäße Mittelplatte mit Erhebungen
- B' =: auf A' abgestimmte Zwischenplatte,
- C, MEA: wie aus Stand der Technik bekannt.

### Figur 3: Ausführungsformen der Abdeckplatte

- C': = Abdeckplatte mit großer Aussparung für eine Membran-Elektrolyt-Einheit (MEA)
- C": = Abdeckplatte mit senkrechten Kanälen
- C"': = Abdeckplatte mit aufgebrachter Dichtung
- C"": = Abdeckplatte mit senkrechten Kanälen und waage- rechten Kanälen parallel zu einem Manifold.

## Patentansprüche

1. Bipolare Platte für eine Brennstoffzelle
**dadurch gekennzeichnet,**
- **dass** sie aus wenigstens drei Platten, einer Mittel- bzw. Endplatte **A,** einer Abdeckplatte **C,** und einer zwischen Mittel- und Abdeckplatte angeordnete Zwischenplatte **B** aufgebaut ist,
- wobei die Zwischenplatte **B** wenigstens eine zentrale Aussparung **2** zum Verteilen eines Betriebsmittels aufweist,
- wobei die Mittel- bzw. Endplatte **A** wenigstens eine Erhebung auf der der Zwischenplatte **B** zugewandten Seite aufweist, die sich in die zentrale Aussparung **2** der Zwischenplatte **B** erstreckt und der Kontaktierung und/oder. Beabstandung der Abdeckplatte **C** dient und
- wobei die Zwischenplatte und die Abdeckplatte im Randbereich als Dichtungen ausgebildet sind.

2. Bipolare Platte nach vorhergehendem Anspruch 1, mit einer Mittelplatte **A',** die mehrere Erhebungen aufweist.

3. Bipolare Platte nach einem der vorhergehenden Ansprüche 1 und 2, mit einer gasdichten Mittelplatte **A',** welche Erhebungen zu beiden Seiten aufweist, zwei daran angrenzende Zwischenplatten **B'** sowie zwei an die Zwischenplatten angrenzende Abdeckplatten **C.**

4. Bipolare Platte nach einem der vorhergehenden Ansprüche 1 bis 3, mit einer Mittelplatte **A'** aus Metall oder Graphit.

5. Bipolare Platte nach einem der vorhergehenden Ansprüche 1 bis 4, bei der die Mittelplatte **A'** ohne Erhebungen eine Dicke von weniger als 0,2, insbesondere von weniger als 0,1 mm aufweist.

6. Bipolare Platte nach einem der vorhergehenden Ansprüche 1 bis 5, bei dem die Zwischenplatte **B'** als Flachdichtung ausgebildet ist.

7. Bipolare Platte nach einem der vorhergehenden Ansprüche 1 bis 6, bei dem die Zwischenplatte **B'** eine Dicke von weniger als 0,4 mm, insbesondere weniger als 0,3 mm aufweist.

8. Bipolare Platte nach einem der vorhergehenden Ansprüche 1 bis 7, bei dem die Zwischenplatte **B'** einen zusätzlichen Strömungsverteiler aufweist.

9. Bipolare Platte nach vorhergehendem Anspruch 8, bei der der Strömungsverteiler als Netz ausgebildet ist, und der nicht mit Netz ausgefüllte Teil der Aussparung der Zwischenplatte einen Manifold bildet.

10. Bipolare Platte nach vorhergehendem Anspruch 9, mit einem Netz aus Metall oder Kunststoff.

11. Bipolare Platte nach vorhergehendem Anspruch 9 oder 10, bei der der als Netz ausgebildete Strömungsverteiler Aussparungen für die Erhebungen der Mittelplatte **A'** aufweist.

12. Bipolare Platte nach einem der vorhergehenden Ansprüche 1 bis 11, mit einer Abdeckplatte **C** aus Metall, Kunststoff oder Graphit.

13. Bipolare Platte nach einem der vorhergehenden Ansprüche 1 bis 12, bei der eine Abdeckplatte **C** eine Dicke von weniger als 0,2 mm, insbesondere weniger als 0,1 mm aufweist.

14. Bipolare Platte nach einem der vorhergehenden Ansprüche 1 bis 13, bei dem die Abdeckplatte **C** Kanäle als eine Strömungsverteilerstruktur aufweist.

15. Bipolare Platte nach einem der vorhergehenden Ansprüche 1 bis 14, bei dem die Abdeckplatte **C** wenigstens einen Kanal parallel zu einem Manifold aufweist.

16. Bipolare Platte nach einem der vorhergehenden Ansprüche 1 bis 15, bei der die Erhebung der Mittelplatte **A'** Kontakt zur Abdeckplatte **C** hat.

17. Bipolare Platte nach einem der vorhergehenden Ansprüche 1 bis 16, bei der die Erhebung der Mittelplatte **A'** einen elektrisch leitenden Kontakt zur Abdeckplatte **C** aufweist.

18. Bipolare Platte nach einem der vorhergehenden Ansprüche 1 bis 17, bei dem die Erhöhungen in Richtung auf die jeweilige Abdeckplatte insbesondere durch Pressen oder Stanzen hergestellt sind.

19. Bipolare Platte nach einem der vorhergehenden Ansprüche 1 bis 18, bei dem wenigstens eine Abdeckplatte **C** eine darauf aufgebrachte Dichtung aufweist.

20. Bipolare Platte nach einem der vorhergehenden Ansprüche 1 bis 19, umfassend eine Mittelplatte **A',** eine Zwischenplatte **B'** und eine Abdeckplatte **C,** die insgesamt eine Dicke von weniger als 0,8 mm, insbesondere von weniger als 0,6 mm aufweisen.

21. Bipolare Platte nach einem der vorhergehenden Ansprüche 1 bis 19, umfassend eine Mittelplatte **A',** zwei Zwischenplatten **B'** und zwei Abdeckplatten **C,** die insgesamt eine Dicke von weniger als 1,4 mm, insbesondere von weniger als 1,0 mm aufweist.

22. Bipolare Platte nach einem der vorhergehenden Ansprüche 1 bis 21 mit einer metallischen Mittelplatte **A',** wenigstens einem Metallnetz als Strömungsverteiler und wenigstens einer Abdeckplatte **C** aus Kunststoff.

23. Bipolare Platte nach einem der vorhergehenden Ansprüche 1 bis 21 mit einer Mittelplatte **A'** aus Kunststoff, wenigstens einem Metallnetz als Strömungsverteiler in der Zwischenplatte **B'** und wenigstens einer Abdeckplatte **C** aus Kunststoff.

24. Bipolare Platte nach einem der vorhergehenden Ansprüche 1 bis 22 mit einer Mittelplatte **A'** und wenigstens einer Abdeckplatte **C** aus Graphit.

25. Brennstoffzellenstapel umfassend wenigstens eine Brennstoffzelle mit einer bipolaren Platte nach einem der vorhergehenden Ansprüche 1 bis 24.

## Claims

1. Bipolar plate for a fuel cell
**characterised in that**
- it is made up of at least three plates, a middle or end plate A, a cover plate C and an intermediate plate B arranged between the middle and cover plate.
- in which the intermediate plate B has at least one central gap 2 to distribute means of operation,
- in which the middle or end plate A has at least one elevation on the side facing the intermediate plate B, which extends into the central gap 2 of the intermediate plate B and is used for contacting and/or distancing the cover plate C and
- in which the intermediate plate and the cover plate are made as seals in the border area.

2. Bipolar plate according to the previous claim 1 with a middle plate A', which has several elevations.

3. Bipolar plate according to the previous claims 1 and 2 with a gastight middle plate A', which has elevations on both sides, two intermediate plates B' adjacent to them as well as two cover plates C adjacent to the intermediate plates.

4. Bipolar plate according to one of the previous claims 1 to 3 with a middle plate A' made of metal or graphite.

5. Bipolar plate according to one of the previous claims 1 to 4, in which the middle plate A' without elevations has a thickness of less than 0.2, particularly of less than 0.1 mm.

6. Bipolar plate according to one of the previous claims 1 to 5, in which the intermediate plate B' is made as a flat seal.

7. Bipolar plate according to one of the previous claims 1 to 6, in which the intermediate plate B' has a thickness of less than 0.4 mm, particularly less than 0.3 mm.

8. Bipolar plate according to one of the previous claims 1 to 7, in which the intermediate plate B' has an additional flow distributor.

9. Bipolar plate according to the previous claim 8, in which the flow distributor is made as a mesh and the part of the gap of the intermediate plate, which is not filled with the mesh, forms a manifold.

10. Bipolar plate according to the previous claim 9 with a mesh made of metal or plastic.

11. Bipolar plate according to the previous claim 9 or 10, in which the flow distributor made as a mesh has gaps for the elevations of the middle plate A'.

12. Bipolar plate according to one of the previous claims 1 to 11 with a cover plate C made of metal, plastic or graphite.

13. Bipolar plate according to one of the previous claims 1 to 12, in which the cover plate C has a thickness of less than 0.2 mm, particularly less than 0.1 mm.

14. Bipolar plate according to one of the previous claims 1 to 13, in which the cover plate C has channels as a flow distribution structure.

15. Bipolar plate according to one of the previous claims 1 to 14, in which the cover plate C has at least one channel parallel to a manifold.

16. Bipolar plate according to one of the previous claims 1 to 15, in which the elevation of the middle plate A' is in contact with the cover plate C.

17. Bipolar plate according to one of the previous claims 1 to 16, in which the elevation of the middle plate A' has an electrically conductive contact to the cover plate C.

18. Bipolar plate according to one of the previous claims 1 to 17, in which the elevations in the direction of the relevant cover plate are produced particularly by pressing or punching.

19. Bipolar plate according to one of the previous claims 1 to 18, in which at least one cover plate C has a seal applied to it.

20. Bipolar plate according to one of the previous claims 1 to 19, comprising a middle plate A', an intermediate plate B' and a cover plate C, which in total have a thickness of less than 0.8 mm, particularly less than 0.6 mm.

21. Bipolar plate according to one of the previous claims 1 to 19, comprising a middle plate A', two intermediate plates B' and two cover plates C', which in total have a thickness of less than 1.4 mm, particularly less than 1.0 mm.

22. Bipolar plate according to one of the previous claims 1 to 21 with a metal middle plate A', at least one metal mesh as a flow distributor and at least one cover plate C made of plastic.

23. Bipolar plate according to one of the previous claims 1 to 21 with a middle plate A' made of plastic, at least one metal mesh as a flow distributor in the intermediate plate B' and at least one cover plate C made of plastic.

24. Bipolar plate according to one of the previous claims 1 to 22 with a middle plate A' and at least one cover plate C made of graphite.

25. Fuel cell stack comprising at least one fuel cell with a bipolar plate according to one of the previous claims 1 to 24.

## Revendications

1. Plaque bipolaire pour une pile à combustible **caractérisée en ce**
- **qu**'elle est constituée d'au moins trois plaques, une plaque médiane ou d'extrémité A, une plaque de recouvrement C et une plaque intermédiaire B disposée entre la plaque médiane et la plaque de recouvrement,
- que la plaque intermédiaire B présentant au moins un évidement (2) central pour la répartition d'un moyen de production,
- que la plaque médiane ou d'extrémité A présentant au moins une surélévation sur le côté tourné vers la plaque intermédiaire B qui s'étend dans l'évidement (2) central de la plaque intermédiaire B et sert à toucher et/ou espacer la plaque de recouvrement C et
- la plaque intermédiaire et la plaque de recouvrement étant réalisées dans la zone de bord comme des garnitures.

2. Plaque bipolaire selon la revendication 1 précédente, avec une plaque médiane A' qui présente plusieurs surélévations.

3. Plaque bipolaire selon l'une quelconque des revendications précédentes 1 et 2, avec une plaque médiane A' étanche au gaz qui présente des surélévations des deux côtés, deux plaques intermédiaires B' contiguës à celle-ci ainsi que deux plaques de recouvrement C contiguës aux plaques intermédiaires.

4. Plaque bipolaire selon l'une quelconque des revendications précédentes 1 à 3 avec une plaque médiane A' en métal ou graphite.

5. Plaque bipolaire selon l'une quelconque des revendications précédentes 1 à 4, pour laquelle la plaque médiane A' sans surélévations présente une épaisseur inférieure à 0,2 mm, en particulier inférieure à 0,1 mm.

6. Plaque bipolaire selon l'une quelconque des revendications précédentes 1 à 5, pour laquelle la plaque intermédiaire B' est réalisée comme une garniture plate.

7. Plaque bipolaire selon l'une quelconque des revendications précédentes 1 à 6, pour laquelle la plaque intermédiaire B' présente une épaisseur inférieure à 0,4 mm, en particulier inférieure à 0,3 mm.

8. Plaque bipolaire selon l'une quelconque des revendications précédentes 1 à 7, pour laquelle la plaque intermédiaire B' présente un distributeur d'écoulement supplémentaire.

9. Plaque bipolaire selon la revendication précédente 8, pour laquelle le distributeur d'écoulement est réalisé comme un filet et la partie non remplie par le filet de l'évidement de la plaque intermédiaire forme un manifold.

10. Plaque bipolaire selon la revendication précédente 9, avec un filet en métal ou en matière plastique.

11. Plaque bipolaire selon la revendication précédente 9 ou 10, pour laquelle le distributeur d'écoulement réalisé comme un filet présente des évidements pour les surélévations de la plaque médiane A'.

12. Plaque bipolaire selon l'une quelconque des revendications précédentes 1 à 11, avec une plaque de recouvrement C en métal, en matière plastique ou en graphite.

13. Plaque bipolaire selon l'une quelconque des revendications précédentes 1 à 12, pour laquelle une plaque de recouvrement C présente une épaisseur inférieure à 0,2 mm, en particulier inférieure à 0,1 mm.

14. Plaque bipolaire selon l'une quelconque des revendications précédentes 1 à 13, pour laquelle la plaque de recouvrement C présente des canaux comme une structure de distribution d'écoulement.

15. Plaque bipolaire selon l'une quelconque des revendications précédentes 1 à 14, pour laquelle la plaque de recouvrement C présente au moins un canal parallèlement à un manifold.

16. Plaque bipolaire selon l'une quelconque des revendications précédentes 1 à 15, pour laquelle la surélévation de la plaque médiane A' a un contact avec la plaque de recouvrement C.

17. Plaque bipolaire selon l'une quelconque des revendications précédentes 1 à 16, pour laquelle la surélévation de la plaque médiane A' présente un contact électroconducteur avec la plaque de recouvrement C.

18. Plaque bipolaire selon l'une quelconque des revendications précédentes 1 à 17, pour laquelle les surélévations sont fabriquées en direction de la plaque de recouvrement respective, en particulier par pressage ou découpage.

19. Plaque bipolaire selon l'une quelconque des revendications précédentes 1 à 18, pour laquelle au moins une plaque de recouvrement C présente une garniture appliquée dessus.

20. Plaque bipolaire selon l'une quelconque des revendications précédentes 1 à 19, comportant une plaque médiane A', une plaque intermédiaire B' et une plaque de recouvrement C qui présentent dans l'ensemble une épaisseur inférieure à 0,8 mm, en particulier inférieure à 0,6 mm.

21. Plaque bipolaire selon l'une quelconque des revendications précédentes 1 à 19, comportant une plaque médiane A', deux plaques intermédiaires B' et deux plaques de recouvrement C, qui présentent dans l'ensemble une épaisseur inférieure à 1,4 mm, en particulier inférieure à 1,0 mm.

22. Plaque bipolaire selon l'une quelconque des revendications précédentes 1 à 21, avec une plaque médiane A' métallique, au moins un filet métallique comme distributeur d'écoulement et au moins une plaque de recouvrement C en matière plastique.

23. Plaque bipolaire selon l'une quelconque des revendications précédentes 1 à 21, avec une plaque médiane A' en matière plastique, au moins un filet métallique comme distributeur d'écoulement dans la plaque intermédiaire B' et au moins une plaque de recouvrement C en matière plastique.

24. Plaque bipolaire selon l'une quelconque des revendications précédentes 1 à 22, avec une plaque médiane A' et au moins une plaque de recouvrement C en graphite.

25. Empilement de piles à combustible comportant au moins une pile à combustible avec une plaque bipolaire selon l'une quelconque des revendications précédentes 1 à 24.
